# EUROPEAN PATENT APPLICATION

(11) **EP 4 280 737 A1**
(43) Date of publication of application: **22.11.2023**
(21) Application number: 21918316.7
(22) Date of filing: 13.01.2021
(51) Int. Cl.: H04W 72/04

(54) **RESOURCE DETERMINATION METHOD AND APPARATUS, AND COMMUNICATION DEVICE**

(71) Applicant: Beijing Xiaomi Mobile Software Co., Ltd., Beijing 100085 (CN)
(72) Inventor: ZHU, Yajun, Beijing 100085 (CN)
(74) Representative: Kudlek, Franz Thomas
(86) International application number: PCT/CN2021/071601
(87) International publication number: WO 2022/151101

(57) **Abstract**

Provided is a resource determination method, which belongs to the technical field of wireless communications. The method comprises: a network device sending a target downlink transmission to a terminal device, and the terminal device determining a corresponding time-frequency domain resource according to a group to which the target downlink transmission belongs, wherein since the target downlink transmission is at least one of one or more groups of downlink transmissions, each group of downlink transmissions comprises one or more combinations of a narrowband synchronization signal, narrowband physical broadcast information and a narrowband system information block. Each group of downlink transmissions has a corresponding time-frequency domain resource, and a network device can indicate the time-frequency domain resource to a terminal device by means of sending different groups of downlink transmissions, such that the terminal device uses the indicated time-frequency domain resource to perform downlink synchronization and/or reception of broadcast information.

## Description

### TECHNICAL FIELD

The present disclosure relates to the field of wireless communication technologies, in particular to, a method for determining a resource, an apparatus, and a communication device.

### BACKGROUND

Narrowband Internet of Things (NB-IoT) supports a cellular data connections of low power devices in a wide area network, also known as low power wide area network (LPWA), and supports efficient connections of devices with long standby time and high requirements on network connectivity.

However, in related arts, for a same cell or network device, the NB-IoT has a relatively fixed time-frequency domain resource used for downlink synchronization and broadcast information reception, and cannot be flexibly configured, and therefore cannot adapt to requirements of beam forming and beam scanning, resulting in inability to improve a coverage performance of the NB-IoT.

### SUMMARY

An embodiment of an aspect of the present disclosure provides a method for determining a resource, performed by a terminal device. The method includes:
receiving a target downlink transmission sent by a network device, in which, the target downlink transmission includes at least one of one or more groups of downlink transmissions, each group of downlink transmissions includes at least one of a narrowband synchronization signal, narrowband physical broadcast information, and a narrowband system information block; and
determining a corresponding time-frequency domain resource based on a group to which the target downlink transmission belongs, in which, the time-frequency domain resource is configured for downlink synchronization and/or broadcast information reception.

Alternatively, a group number of each group of downlink transmissions has a correspondence relationship with a time-frequency domain resource; in which, determining the corresponding time-frequency domain resource based on the group to which the target downlink transmission belongs includes:
determining the corresponding time-frequency domain resource based on a group number of the group to which the target downlink transmission belongs.

Alternatively, the narrowband synchronization signal includes a narrowband secondary synchronization signal (NSSS), and the method includes:
determining the group number of the group to which the target downlink transmission belongs based on a first generation parameter and/or a base sequence of the NSSS in the target downlink transmission.

Alternatively, the first generation parameter includes a cyclic shift parameter; and
each group of downlink transmissions has at least one corresponding cyclic shift parameter, and different groups of downlink transmissions correspond to different cyclic shift parameters.

Alternatively, the narrowband physical broadcast information includes a narrowband physical broadcast channel (NPBCH), and the method includes:
determining the group number of the group to which the target downlink transmission belongs based on a second generation parameter and/or a scrambling sequence of the NPBCH in the target downlink transmission.

Alternatively, the second generation parameter includes a scrambling initialization factor; and
each group of downlink transmissions has at least one corresponding scrambling initialization factor, and different groups of downlink transmissions correspond to different scrambling initialization factors.

Alternatively, the method includes:
determining a beam corresponding to the time-frequency domain resource based on a beam carrying the target downlink transmission.

Alternatively, the method includes:
determining a beam corresponding to the time-frequency domain resource based on the group to which the target downlink transmission belongs.

An embodiment of another aspect of the present disclosure provides a method for determining a resource, performed by a network device. The method includes:
sending a target downlink transmission to a terminal device, in which, the target downlink transmission includes at least one of one or more groups of downlink transmissions, each group of downlink transmissions includes at least one of a narrowband synchronization signal, narrowband physical broadcast information, and a narrowband system information block, and each group of downlink transmissions corresponds to a time-frequency domain resource.

Alternatively, a group number of each group of downlink transmissions has a correspondence relationship with a time-frequency domain resource.

Alternatively, the narrowband synchronization signal includes a narrowband secondary synchronization signal (NSSS); and
the group number is a first generation parameter and/or a base sequence of the NSSS.

Alternatively, the first generation parameter includes a cyclic shift parameter; and
each group of downlink transmissions has at least one cyclic shift parameter, and different groups of downlink transmissions correspond to different cyclic shift parameters.

Alternatively, the narrowband physical broadcast information includes a narrowband physical broadcast channel (NPBCH); and
the group number is a second generation parameter and/or a scrambling sequence of the NPBCH.

Alternatively, the second generation parameter includes a scrambling initialization factor; and
each group of downlink transmissions has at least one corresponding scrambling initialization factor, and different groups of downlink transmissions correspond to different scrambling initialization factors.

An embodiment of another aspect of the present disclosure provides an apparatus for determining a resource, performed by a terminal device. The apparatus includes:
a receiving module, configured to receive a target downlink transmission sent by a network device, in which, the target downlink transmission includes at least one of one or more groups of downlink transmissions, each group of downlink transmissions includes at least one of a narrowband synchronization signal, narrowband physical broadcast information, and a narrowband system information block; and
a first determining module, configured to determine a corresponding time-frequency domain resource based on a group to which the target downlink transmission belongs, in which, the time-frequency domain resource is configured for downlink synchronization and/or broadcast information reception.

Alternatively, a group number of each group of downlink transmissions has a correspondence relationship with a time-frequency domain resource;
in which, the first determining module is specifically configured to:
determine the corresponding time-frequency domain resource based on a group number of the group to which the target downlink transmission belongs.

Alternatively, the narrowband synchronization signal includes a narrowband secondary synchronization signal (NSSS), and the apparatus includes:
a second determining module, configured to determine the group number of the group to which the target downlink transmission belongs based on a first generation parameter and/or a base sequence of the NSSS in the target downlink transmission.

Alternatively, the first generation parameter includes a cyclic shift parameter; and each group of downlink transmissions has at least one corresponding cyclic shift parameter, and different groups of downlink transmissions correspond to different cyclic shift parameters.

Alternatively, the narrowband physical broadcast information includes a narrowband physical broadcast channel (NPBCH), and the second determining module is configured to:
determine the group number of the group to which the target downlink transmission belongs based on a second generation parameter and/or a scrambling sequence of the NPBCH in the target downlink transmission.

Alternatively, the second generation parameter includes a scrambling initialization factor; and each group of downlink transmissions has at least one corresponding scrambling initialization factor, and different groups of downlink transmissions correspond to different scrambling initialization factors.

Alternatively, the apparatus includes:
a third determining module, configured to determine a beam corresponding to the time-frequency domain resource based on a beam carrying the target downlink transmission.

Alternatively, the third determining module is configured to: determine a beam corresponding to the time-frequency domain resource based on the group to which the target downlink transmission belongs.

An embodiment of another aspect of the present disclosure provides an apparatus for determining a resource, performed by a network device. The apparatus includes:
a sending module, configured to send a target downlink transmission sent by a terminal device, in which, the target downlink transmission includes at least one of one or more groups of downlink transmissions, each group of downlink transmissions includes at least one of a narrowband synchronization signal, narrowband physical broadcast information, and a narrowband system information block, each group of downlink transmissions corresponds to a time-frequency domain resource.

Alternatively, a group number of each group of downlink transmissions has a correspondence relationship with a time-frequency domain resource.

Alternatively, the narrowband synchronization signal includes a narrowband secondary synchronization signal (NSSS); and the group number is a first generation parameter and/or a base sequence of the NSSS.

Alternatively, the first generation parameter includes a cyclic shift parameter; and each group of downlink transmissions has at least one corresponding cyclic shift parameter, and different groups of downlink transmissions correspond to different cyclic shift parameters.

Alternatively, the narrowband physical broadcast information includes a narrowband physical broadcast channel (NPBCH); and the group number is a second generation parameter and/or a scrambling sequence of the NPBCH.

Alternatively, the second generation parameter includes a scrambling initialization factor; and each group of downlink transmissions has at least one corresponding scrambling initialization factor, and different groups of downlink transmissions correspond to different scrambling initialization factors.

An embodiment of another aspect of the present disclosure provides a communication device. The communication device includes: a transceiver; a memory; a processor, respectively coupled to the transceiver and the memory, and configured to control wireless signal transmission and reception of the transceiver by executing computer executable instructions on the memory, and capable of implementing the method the method as described in the first aspect or the second aspect.

An embodiment of another aspect of the present disclosure provides a computer storage medium having computer executable instructions stored thereon. The computer executable instructions are caused to implement the method as described in the first aspect or the second aspect when executed by a processor.

The technical solution of embodiments of the present disclosure may include the following technical effects.

The network device sends the target downlink transmission to the terminal device, the terminal device determines the corresponding time-frequency domain resource based on the group to which the target downlink transmission belongs. Since the target downlink transmission includes at least one of one or more groups of downlink transmissions, each group of downlink transmissions includes at least one of the narrowband synchronization signal, the narrowband physical broadcast information, and the narrowband system information block, and each group of downlink transmissions has the corresponding time-frequency domain resource, the network device may indicate to the terminal the time-frequency domain resource by sending different groups of downlink transmissions, causing the terminal device to perform the downlink synchronization and/or broadcast information reception based on the time-frequency domain resource indicated.

Additional aspects and advantages of the present disclosure will be partially given in the following description, and some will become obvious from the following description, or be understood through practice of the present disclosure.

### BRIEF DESCRIPTION OF THE DRAWINGS

The above-mentioned and/or additional aspects and advantages of the present disclosure will be apparent and readily understood from the following description of embodiments taken in conjunction with the accompanying drawings, in which:
FIG. 1 is a flowchart illustrating a method for determining a resource provided in an embodiment of the present disclosure.
FIG. 2 is a flowchart illustrating a method for determining a resource provided in an embodiment of the present disclosure.
FIG. 3 is a flowchart illustrating a method for determining a resource provided in an embodiment of the present disclosure.
FIG. 4 is a flowchart illustrating a method for determining a resource provided in an embodiment of the present disclosure.
FIG. 5 is a schematic diagram illustrating a structure of an apparatus 110 for determining a resource provided in an embodiment of the present disclosure.
FIG. 6 is a schematic diagram illustrating a structure of an apparatus 120 for determining a resource provided in an embodiment of the present disclosure.
FIG. 7 is a block diagram illustrating a terminal device 800 provided in an embodiment of the present disclosure.
FIG. 8 is a schematic diagram illustrating a structure of a network device 900 provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these pieces of information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

Embodiments of the present disclosure are described in detail below, examples of which are illustrated in the accompanying drawings. The same or similar reference numerals represent the same or similar elements throughout the descriptions. The embodiments described below with reference to the accompanying drawings are illustrative, are intended to explain the present disclosure and cannot be construed as limiting the present disclosure.

In related arts, a network device is required to rely on a beam mapping solution to perform beam forming and beam scanning. In the beam mapping solution, a mapping pattern between each beam and a unit of time is indicated. Accordingly, for the beam mapping solution, the network device is also required to configure a corresponding time-frequency domain resource for each beam, such that the network device has the corresponding time-frequency domain resource for sending information when sending a beam according to the beam mapping solution. The terminal device receives information based on the time-frequency domain resource and the corresponding beam.

In an embodiment of the present disclosure, there is provided at least one of groups of downlink transmissions. Each group of downlink transmissions includes at least one of the narrowband synchronization signal, the narrowband physical broadcast information, and the narrowband system information block. Each group of downlink transmissions has the corresponding time-frequency domain resource. The network device may indicate to the terminal the time-frequency domain resource by sending different groups of downlink transmissions, causing the terminal device to perform the downlink synchronization and/or broadcast information reception based on the time-frequency domain resource indicated. A method for determining a resource, an apparatus, and a communication device provided by the present disclosure are described in detail with reference to the accompany drawings below.

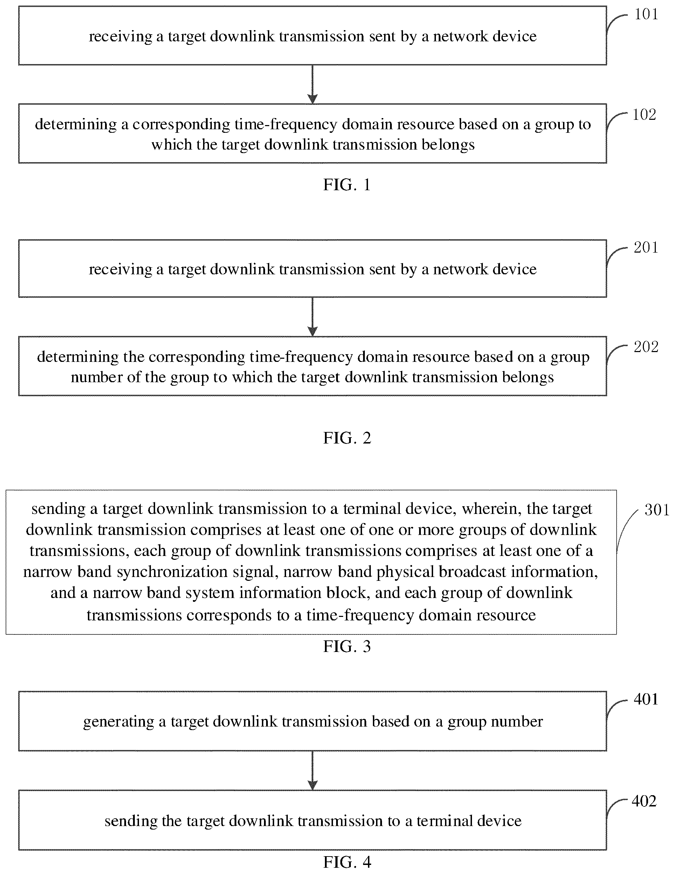

FIG. 1 is a flowchart illustrating a method for determining a resource provided in an embodiment of the present disclosure. The method is performed by a terminal device.

As illustrated in FIG. 1, the method includes the following steps.

At step 101, a target downlink transmission sent by a network device is received.

The target downlink transmission includes at least one of one or more groups of downlink transmissions.

Each group of downlink transmissions may include at least one of a narrowband synchronization signal, narrowband physical broadcast information, and a narrowband system information block. In some implementations, the narrowband synchronization signal may include at least one of a narrowband primary synchronization signal and a narrowband secondary synchronization signal. Alternatively, in other implementations, the narrowband physical broadcast information is specifically a narrowband physical broadcast channel.

It should be noted that the aforementioned implementations can be implemented independently or in combination, which will not be limited in this embodiment.

The network device is pre-configured with a plurality of groups of downlink transmissions, each group of downlink transmissions corresponds to a beam. The narrowband synchronization signal, narrowband physical broadcast information, or narrowband system information block differs at least in one aspect among different groups in the downlink transmissions. Thus, different groups of downlink transmissions may be distinguished. The terminal device may determine the group to which the target downlink transmission belongs based on at least one of the narrowband synchronization signal, the narrowband physical broadcast information, and the narrowband system information block included in the target downlink transmission.

At step 102, a corresponding time-frequency domain resource is determined based on a group to which the target downlink transmission belongs.

The time-frequency domain resource is configured for downlink synchronization and/or broadcast information reception.

The network device sends the target downlink transmission to the terminal device. The target downlink transmission includes at least one of the narrowband synchronization signal, the narrowband physical broadcast information, and the narrowband system information block. The terminal device determines the group to which the target downlink transmission belongs based on at least one of the narrowband synchronization signal, the narrowband physical broadcast information, and the narrowband system information block included in the received target downlink transmission.

In some embodiments of the present disclosure, the network device has pre-configured for the terminal device the time-frequency domain resource corresponding to each group, and the terminal device may determine the corresponding time-frequency domain resource based on the group to which the target downlink transmission belongs.

In other embodiments of the present disclosure, the time-frequency domain resource corresponding to each group has been specified based on a communication standard and other methods, such that the terminal device may determine the corresponding time-frequency domain resource based on the group to which the target downlink transmission belongs.

After determining the time-frequency domain resource corresponding to the target downlink transmission, the terminal device may perform the downlink synchronization and/or broadcast reception based on the time-frequency domain resource.

There may be one group or a plurality of groups of target downlink transmissions. Abeam corresponding to at least one group of target downlink transmissions may be a same beam, and time-frequency domain resources corresponding to at least one group of target downlink transmissions may be the same or different. At least some scenarios will be explained in detail below.

In a possible scenario, when a set beam corresponds to one group of target downlink transmissions, the group of target downlink transmissions corresponds to at least one time-frequency domain resource. The terminal device may perform the downlink synchronization and/or broadcast information reception based on at least one time-frequency domain resource corresponding to the target downlink transmission.

In another possible scenario, when a set beam corresponds to a plurality of groups of target downlink transmissions, and the set beam includes a plurality of beams, respective groups of target downlink transmissions correspond to different beams, and the plurality of groups of target downlink transmissions may correspond to different at least one time-frequency domain resource, that is, respective groups of target downlink transmissions correspond to different time-frequency domain resources, such that the terminal device may perform the downlink synchronization and/or broadcast information reception based on different at least one time-frequency domain resource corresponding to the plurality of groups of target downlink transmissions.

It should be noted that the set beam mentioned above may be a beam of the network device for sending the target downlink transmission. Of course, in some embodiments, the beam of the network device for sending the target downlink transmission may be a beam corresponding to the group to which the target downlink transmission belongs, which is not limited in this embodiment. The terminal device may perform the downlink synchronization and/or broadcast information reception based on the set beam and the determined time-frequency domain resource.

In embodiments of the present disclosure, the network device sends the target downlink transmission to the terminal device, the terminal device determines the corresponding time-frequency domain resource based on the group to which the target downlink transmission belongs. Since the target downlink transmission includes at least one of one or more groups of downlink transmissions, each group of downlink transmissions includes at least one of the narrowband synchronization signal, the narrowband physical broadcast information, and the narrowband system information block, and each group of downlink transmissions has the corresponding time-frequency domain resource, the network device may indicate to the terminal the time-frequency domain resource by sending different groups of downlink transmissions, causing the terminal device to perform the downlink synchronization and/or broadcast information reception based on the time-frequency domain resource indicated.

FIG. 2 is a flowchart illustrating a method for determining a resource provided in an embodiment of the present disclosure. The method is performed by a terminal device.

As illustrated in FIG. 2, the method includes the following steps.

At step 201, a target downlink transmission sent by a network device is received.

The target downlink transmission includes at least one of one or more groups of downlink transmissions. Each group of downlink transmissions includes at least one of a narrowband synchronization signal, narrowband physical broadcast information, and a narrowband system information block. The narrowband physical broadcast information is carried on a narrowband physical broadcast channel.

Each group of downlink transmissions may include at least one of the narrowband synchronization signal, the narrowband physical broadcast information, and the narrowband system information block. In some implementations, the narrowband synchronization signal may include at least one of a narrowband primary synchronization signal and a narrowband secondary synchronization signal. Alternatively, in other implementations, the narrowband physical broadcast information is specifically the narrowband physical broadcast channel.

It should be noted that the aforementioned implementations can be implemented independently or in combination, which will not be limited in this embodiment.

The network device is pre-configured with a plurality of groups of downlink transmissions, each group of downlink transmissions corresponds to a beam. The narrowband synchronization signal, narrowband physical broadcast information, or narrowband system information block differs at least in one aspect among different groups in the downlink transmissions. Thus, different groups of downlink transmissions may be distinguished. The terminal device may determine a group number of a group to which the target downlink transmission belongs based on at least one of the narrowband synchronization signal, the narrowband physical broadcast information, and the narrowband system information block included in the target downlink transmission.

At step 202, the corresponding time-frequency domain resource is determined based on the group number of the group to which the target downlink transmission belongs.

In some embodiments, the group number of the group to which the target downlink transmission belongs is determined based on a first generation parameter and/or a base sequence of the narrowband secondary synchronization signal in the target downlink transmission.

The base sequence of the narrowband secondary synchronization signal is generated according to the first generation parameter of the narrowband secondary synchronization signal. In some embodiments, the first generation parameter may be a cyclic shift parameter. As a possible implementation, in the plurality of groups of downlink transmissions, each group of downlink transmissions has at least one corresponding cyclic shift parameter, and different groups of downlink transmissions correspond to different cyclic shift parameters for distinguishing between different groups.

For example, each group of downlink transmissions may correspond to one to four cyclic shift parameters, and a cyclic shift parameter used for the narrowband secondary synchronization signal in the sent target downlink transmission may be one of the at least one cyclic shift parameter corresponding to the group to which the target downlink transmission belongs. The network device may select a corresponding cyclic shift parameter from the plurality of cyclic shift parameters corresponding to the group to which the target downlink transmission belongs based on different time domains or frequency domains occupied by sending the target downlink transmission.

The network device substitutes a selected cyclic shift parameter into a formula for generating the base sequence of the narrowband secondary synchronization signal, to obtain the base sequence of the secondary auxiliary synchronization signal. In this embodiment, the formula for generating the base sequence may adopt a generation formula in a relevant protocol, or may be a formula corresponding to other predetermined generation rule, which will not be limited in this embodiment.

The terminal device generates each candidate base sequence based on the formula for generating the base sequence and the cyclic shift parameter corresponding to each group of downlink transmissions. The terminal device determines the base sequence and the corresponding cyclic shift parameter of the narrowband secondary synchronization signal in the target downlink transmission based on a correlation between each candidate base sequence and the narrowband secondary synchronization signal in the target downlink transmission, and then determines the group number of the group to which the target downlink transmission belongs based on at least one of the base sequence and the corresponding cyclic shift parameter of the narrowband secondary synchronization signal in the target downlink transmission.

**In** other embodiments, the group number of the group to which the target downlink transmission belongs is determined based on a second generation parameter and/or a scrambling sequence of the narrowband physical broadcast channel in the target downlink transmission.

The scrambling sequence of the narrowband physical broadcast channel is generated based on the second generation parameter of the narrowband physical broadcast channel. In some embodiments, the second generation parameter may be a scrambling initialization factor. As a possible implementation, in the plurality of groups of downlink transmissions, each group of downlink transmissions has at least one corresponding scrambling initialization factor, and different groups of downlink transmissions correspond to different scrambling initialization factors for distinguishing between different groups.

For example, the scrambling initialization factors corresponding to respective groups of downlink transmissions may be obtained by adding different offsets to a scrambling initialization factor Cᵢₙᵢₜ set in a relevant protocol, or multiplying the factor Cᵢₙᵢₜ by different coefficients, or transforming the factor Cᵢₙᵢₜ in different manner using other rules, resulting in scrambling initialization factors corresponding to different groups of downlink transmissions having different values.

The network device substitutes a selected scrambling initialization factor into a formula for generating the scrambling sequence of the narrowband physical broadcast channel, to obtain the scrambling sequence of the narrowband physical broadcast channel. In this embodiment, the formula for generating the scrambling sequence may adopt a generation formula in a relevant protocol, or a formula corresponding to other predetermined generation rule, which will not be limited in this embodiment.

The terminal device generates each candidate scrambling sequence based on the formula for generating the scrambling sequence and the corresponding scrambling initialization factor corresponding to each group of downlink transmissions. The terminal device determines the scrambling sequence and the corresponding scrambling initialization factor of the narrowband physical broadcast channel in the target downlink transmission based on a correlation between each candidate scrambling sequence and the narrowband physical broadcast channel in the target downlink transmission, and then determines the group number of the group to which the target downlink transmission belongs based on at least one of the scrambling sequence and the corresponding scrambling initialization factor of the narrowband physical broadcast channel in the target downlink transmission.

In embodiments of the present disclosure, the network device sends the target downlink transmission to the terminal device, the terminal device determines the corresponding time-frequency domain resource based on the group to which the target downlink transmission belongs. Since the target downlink transmission includes at least one of one or more groups of downlink transmissions, each group of downlink transmissions includes at least one of the narrowband synchronization signal, the narrowband physical broadcast information, and the narrowband system information block, and each group of downlink transmissions has the corresponding time-frequency domain resource, the network device may indicate to the terminal the time-frequency domain resource by sending different groups of downlink transmissions, causing the terminal device to perform the downlink synchronization and/or broadcast information reception based on the time-frequency domain resource indicated.

FIG. 3 is a flowchart illustrating a method for determining a resource provided in an embodiment of the present disclosure. The method is performed by a network device.

As illustrated in FIG. 3, the method includes the following step.

**At** step 301, a target downlink transmission is sent to a terminal device. The target downlink transmission includes at least one of one or more groups of downlink transmissions. Each group of downlink transmissions includes at least one of a narrowband synchronization signal, narrowband physical broadcast information, and a narrowband system information block. Each group of downlink transmissions corresponds to a time-frequency domain resource.

The network device is pre-configured with a plurality of groups of downlink transmissions, each group of downlink transmissions corresponds to a beam. Each group of downlink transmissions may include at least one of a narrowband synchronization signal, narrowband physical broadcast information, and a narrowband system information block. In some implementations, the narrowband synchronization signal may include at least one of a narrowband primary synchronization signal and a narrowband secondary synchronization signal. Alternatively, in other implementations, the narrowband physical broadcast information is specifically a narrowband physical broadcast channel.

It should be noted that the aforementioned implementations can be implemented independently or in combination, which will not be limited in this embodiment.

The narrowband synchronization signal, narrowband physical broadcast information, or narrowband system information block differs at least in one aspect among different groups in the downlink transmissions. Thus, different groups of downlink transmissions may be distinguished. The terminal device may determine the group to which the target downlink transmission belongs based on at least one of the narrowband synchronization signal, the narrowband physical broadcast information, and the narrowband system information block included in the target downlink transmission.

The network device sends the target downlink transmission to the terminal device. The target downlink transmission includes at least one of the narrowband synchronization signal, the narrowband physical broadcast information, and the narrowband system information block. The terminal device determines the group to which the target downlink transmission belongs based on at least one of the narrowband synchronization signal, the narrowband physical broadcast information, and the narrowband system information block included in the received target downlink transmission.

In some embodiments of the present disclosure, the network device has pre-configured for the terminal device the time-frequency domain resource corresponding to each group, and the terminal device may determine the corresponding time-frequency domain resource based on the group to which the target downlink transmission belongs.

In other embodiments of the present disclosure, the time-frequency domain resource corresponding to each group has been specified based on a standard and other methods, such that the terminal device may determine the corresponding time-frequency domain resource based on the group to which the target downlink transmission belongs.

After determining the time-frequency domain resource corresponding to the target downlink transmission, the terminal device may perform the downlink synchronization and/or broadcast reception based on the time-frequency domain resource.

In an embodiment of the preset disclosure, there may be one group or a plurality of groups of target downlink transmission. A beam corresponding to at least one group of target downlink transmissions may be a same beam, and time-frequency domain resources corresponding to at least one group of target downlink transmissions may be the same or different. At least some scenarios will be explained in detail below.

In a possible scenario, when a set beam corresponds to one group of target downlink transmissions, the group of target downlink transmissions corresponds to at least one time-frequency domain resource. The terminal device may perform the downlink synchronization and/or broadcast information reception based on at least one time-frequency domain resource corresponding to the target downlink transmissions.

In another possible scenario, when a set beam corresponds to a plurality of groups of target downlink transmissions, and the set beam includes a plurality of beams, respective groups of target downlink transmissions correspond to different beams, and the plurality of groups of target downlink transmissions may correspond to different at least one time-frequency domain resource, that is, respective groups of target downlink transmissions correspond to different time-frequency domain resources, such that the terminal device may perform the downlink synchronization and/or broadcast information reception based on different at least one time-frequency domain resource corresponding to the plurality of groups of target downlink transmissions.

It should be noted that the set beam mentioned above may be a beam of the network device for sending the target downlink transmission. Of course, in some embodiments, the beam of the network device for sending the target downlink transmission may be a beam corresponding to the group to which the target downlink transmission belongs, which is not limited in this embodiment. The terminal device may perform the downlink synchronization and/or broadcast information reception based on the set beam and the determined time-frequency domain resource.

In embodiments of the present disclosure, the network device sends the target downlink transmission to the terminal device, the terminal device determines the corresponding time-frequency domain resource based on the group to which the target downlink transmission belongs. Since the target downlink transmission includes at least one of one or more groups of downlink transmissions, each group of downlink transmissions includes at least one of the narrowband synchronization signal, the narrowband physical broadcast information, and the narrowband system information block, and each group of downlink transmissions has the corresponding time-frequency domain resource, the network device may indicate to the terminal the time-frequency domain resource by sending different groups of downlink transmissions, causing the terminal device to perform the downlink synchronization and/or broadcast information reception based on the time-frequency domain resource indicated.

FIG. 4 is a flowchart illustrating a method for determining a resource provided in an embodiment of the present disclosure. The method is performed by a network device.

As illustrated in FIG. 4, the method includes the following steps.

At step 401, the target downlink transmission is generated based on a group number.

The target downlink transmission includes at least one of one or more groups of downlink transmissions. Each group of downlink transmissions includes at least one of a narrowband synchronization signal, narrowband physical broadcast information, and a narrowband system information block.

In some implementations, the narrowband synchronization signal may include at least one of a narrowband primary synchronization signal and a narrowband secondary synchronization signal. Alternatively, in other implementations, the narrowband physical broadcast information is specifically the narrowband physical broadcast channel. It should be noted that the aforementioned implementations can be implemented independently or in combination, which will not be limited in this embodiment.

The network device determines a group corresponding to a beam from a plurality of groups of downlink transmissions based on a beam used by the terminal device for performing downlink transmission, and generates the target downlink transmission based on the group number of the group.

In some embodiments, the group number is a first generation parameter and/or a base sequence of a narrowband secondary synchronization signal.

The base sequence of the narrowband secondary synchronization signal is generated according to the first generation parameter of the narrowband secondary synchronization signal. In some embodiments, the first generation parameter may be a cyclic shift parameter. As a possible implementation, in the plurality of groups of downlink transmissions, each group of downlink transmissions has at least one corresponding cyclic shift parameter, and different groups of downlink transmissions correspond to different cyclic shift parameters for distinguishing between different groups.

For example, each group of downlink transmissions may correspond to one to four cyclic shift parameters, and a cyclic shift parameter used for the narrowband secondary synchronization signal in the sent target downlink transmission may be one of the at least one cyclic shift parameter corresponding to the group to which the target downlink transmission belongs. The network device may select a corresponding cyclic shift parameter from the plurality of cyclic shift parameters corresponding to the group to which the target downlink transmission belongs based on different time domains or frequency domains occupied by sending the target downlink transmission.

The network device substitutes a selected cyclic shift parameter into a formula for generating the base sequence of the narrowband secondary synchronization signal, to obtain the base sequence of the secondary auxiliary synchronization signal. In this embodiment, the formula for generating the base sequence may adopt a generation formula in a relevant protocol, or may be a formula corresponding to other predetermined generation rule, which will not be limited in this embodiment.

The terminal device generates each candidate base sequence based on the formula for generating the base sequence and the cyclic shift parameter corresponding to each group of downlink transmissions. The terminal device determines the base sequence and the corresponding cyclic shift parameter of the narrowband secondary synchronization signal in the target downlink transmission based on a correlation between each candidate base sequence and the narrowband secondary synchronization signal in the target downlink transmission, and then determines the group number of the group to which the target downlink transmission belongs based on at least one of the base sequence and the corresponding cyclic shift parameter of the narrowband secondary synchronization signal in the target downlink transmission.

In other embodiments, the group number is a second generation parameter and/or a scrambling sequence of a narrowband physical broadcast channel.

The scrambling sequence of the narrowband physical broadcast channel is generated based on the second generation parameter of the narrowband physical broadcast channel. In some embodiments, the second generation parameter may be a scrambling initialization factor. As a possible implementation, in the plurality of groups of downlink transmissions, each group of downlink transmissions has at least one corresponding scrambling initialization factor, and different groups of downlink transmissions correspond to different scrambling initialization factors for distinguishing between different groups.

For example, the scrambling initialization factors corresponding to respective groups of downlink transmissions may be obtained by adding different offsets to a scrambling initialization factor Cᵢₙᵢₜ set in a relevant protocol, or multiplying the factor Cᵢₙᵢₜ by different coefficients, or transforming the factor Cᵢₙᵢₜ in different manner using other rules, resulting in scrambling initialization factors corresponding to different groups of downlink transmissions having different values.

The network device substitutes a selected scrambling initialization factor into a formula for generating the scrambling sequence of the narrowband physical broadcast channel, to obtain the scrambling sequence of the narrowband physical broadcast channel. In this embodiment, the formula for generating the scrambling sequence may adopt a generation formula in a relevant protocol, or a formula corresponding to other predetermined generation rule, which will not be limited in this embodiment.

The terminal device generates each candidate scrambling sequence based on the formula for generating the scrambling sequence and the corresponding scrambling initialization factor corresponding to each group of downlink transmissions. The terminal device determines the scrambling sequence and the corresponding scrambling initialization factor of the narrowband physical broadcast channel in the target downlink transmission based on a correlation between each candidate scrambling sequence and the narrowband physical broadcast channel in the target downlink transmission, and then determines the group number of the group to which the target downlink transmission belongs based on at least one of the scrambling sequence and the corresponding scrambling initialization factor of the narrowband physical broadcast channel in the target downlink transmission.

At step 402, the target downlink transmission is sent to the terminal device.

The network device is pre-configured with a plurality of groups of downlink transmissions, each group of downlink transmissions corresponds to a beam. For different groups of downlink transmissions, due to different group numbers, the narrowband synchronization signal, narrowband physical broadcast information, or narrowband system information block that are generated based on the group number differs at least in one aspect among different groups. Thus, different groups of downlink transmissions may be distinguished. The terminal device may determine the group number of the group to which the target downlink transmission belongs based on at least one of the narrowband synchronization signal, the narrowband physical broadcast information, and the narrowband system information block included in the target downlink transmission.

**A** group number of each group of downlink transmissions has a correspondence relationship with a time-frequency domain resource. Therefore, the network device may indicate a configured time-frequency domain resource based on the group number of the target downlink transmission by means of sending the target downlink transmission to the terminal device. The terminal device may obtain the time-frequency domain resource configured by the network device based on the group number, and then perform downlink synchronization and/or broadcast reception based on the time-frequency domain resource.

In some embodiments, the network device may send the target downlink transmission by a beam matching with the time-frequency domain resource indicated by the target downlink transmission. Those skilled in the art may be known that the network device may also the target downlink transmission by other beam, which will not be limited in this embodiment.

In embodiments of the present disclosure, the network device sends the target downlink transmission to the terminal device, the terminal device determines the corresponding time-frequency domain resource based on the group to which the target downlink transmission belongs. Since the target downlink transmission includes at least one of one or more groups of downlink transmissions, each group of downlink transmissions includes one or more combinations of the narrowband synchronization signal, the narrowband physical broadcast information, and the narrowband system information block, and each group of downlink transmissions has the corresponding time-frequency domain resource, the network device may indicate to the terminal the time-frequency domain resource by sending different groups of downlink transmissions, causing the terminal device to perform the downlink synchronization and/or broadcast information reception based on the time-frequency domain resource indicated.

Corresponding to the method for determining the resource provided by the aforementioned embodiments, the present disclosure also provides an apparatus for determining a resource, performed by a terminal device. Since the apparatus for determining the resource provided by embodiments of the present disclosure corresponds to the method provided by the aforementioned embodiments, implementations of the method for determining the resource is also applicable to the apparatus for determining the resource provided by this embodiment, which will not be described in detail in this embodiment.

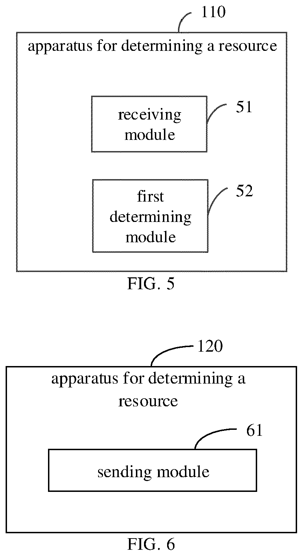

FIG. 5 is a schematic diagram illustrating a structure of an apparatus 110 for determining a resource provided in an embodiment of the present disclosure. The apparatus is applicable for a terminal device.

As illustrated in FIG. 5, the apparatus for determining the resource include a receiving module 51 and a first determining module 52.

The receiving module 51 is configured to receive a target downlink transmission sent by a network device. The target downlink transmission includes at least one of one or more groups of downlink transmissions. Each group of downlink transmissions includes at least one of a narrowband synchronization signal, narrowband physical broadcast information, and a narrowband system information block; and

The first determining module 52 is configured to determine a corresponding time-frequency domain resource based on a group to which the target downlink transmission belongs. The time-frequency domain resource is configured for downlink synchronization and/or broadcast information reception.

Further, as a possible implementation, a group number of each group of downlink transmissions has a correspondence relationship with a time-frequency domain resource;

in which, the first determining module is specifically configured to:

determine the corresponding time-frequency domain resource based on a group number of the group to which the target downlink transmission belongs.

As a possible implementation, the narrowband synchronization signal includes a narrowband secondary synchronization signal (NSSS), and the apparatus includes:
a second determining module, configured to determine the group number of the group to which the target downlink transmission belongs based on a first generation parameter and/or a base sequence of the NSSS in the target downlink transmission.

As a possible implementation, the first generation parameter includes a cyclic shift parameter; and each group of downlink transmissions has at least one corresponding cyclic shift parameter, and different groups of downlink transmissions correspond to different cyclic shift parameters.

As a possible implementation, the narrowband physical broadcast information includes a narrowband physical broadcast channel (NPBCH), and the second determining module is configured to:
determine the group number of the group to which the target downlink transmission belongs based on a second generation parameter and/or a scrambling sequence of the NPBCH in the target downlink transmission.

As a possible implementation, the second generation parameter includes a scrambling initialization factor; and each group of downlink transmissions has at least one corresponding scrambling initialization factor, and different groups of downlink transmissions correspond to different scrambling initialization factors.

As a possible implementation, the apparatus includes:
a third determining module, configured to determine a beam corresponding to the time-frequency domain resource based on a beam carrying the target downlink transmission.

As a possible implementation, the third determining module is configured to: determine a beam corresponding to the time-frequency domain resource based on the group to which the target downlink transmission belongs.

In the apparatus for determining the resource of embodiments of the present disclosure, the network device sends the target downlink transmission to the terminal device, the terminal device determines the corresponding time-frequency domain resource based on the group to which the target downlink transmission belongs. Since the target downlink transmission includes at least one of one or more groups of downlink transmissions, each group of downlink transmissions includes at least one of the narrowband synchronization signal, the narrowband physical broadcast information, and the narrowband system information block, and each group of downlink transmissions has the corresponding time-frequency domain resource, the network device may indicate to the terminal the time-frequency domain resource by sending different groups of downlink transmissions, causing the terminal device to perform the downlink synchronization and/or broadcast information reception based on the time-frequency domain resource indicated.

Corresponding to the method for determining the resource provided by the aforementioned embodiments, the present disclosure also provides an apparatus for determining a resource, performed by a network device. Since the apparatus for determining the resource provided by embodiments of the present disclosure corresponds to the method provided by the aforementioned embodiments, implementations of the method for determining the resource is also applicable to the apparatus for determining the resource provided by this embodiment, which will not be described in detail in this embodiment.

**FIG.** 6 is a schematic diagram illustrating a structure of an apparatus 120 for determining a resource provided in an embodiment of the present disclosure. The apparatus is applicable for a network device.

**A** sending module 61 is configured to send a target downlink transmission sent by a terminal device. The target downlink transmission includes at least one of one or more groups of downlink transmissions. Each group of downlink transmissions includes at least one of a narrowband synchronization signal, narrowband physical broadcast information, and a narrowband system information block. Each group of downlink transmissions corresponds to a time-frequency domain resource.

Further, as a possible implementation, a group number of each group of downlink transmissions has a correspondence relationship with a time-frequency domain resource.

As a possible implementation, the narrowband synchronization signal includes a narrowband secondary synchronization signal (NSSS); and the group number is a first generation parameter and/or a base sequence of the NSSS.

As a possible implementation, the first generation parameter includes a cyclic shift parameter; and each group of downlink transmissions has at least one corresponding cyclic shift parameter, and different groups of downlink transmissions correspond to different cyclic shift parameters.

As a possible implementation, the narrowband physical broadcast information includes a narrowband physical broadcast channel (NPBCH); and the group number is a second generation parameter and/or a scrambling sequence of the NPBCH.

As a possible implementation, the second generation parameter includes a scrambling initialization factor; and each group of downlink transmissions has at least one corresponding scrambling initialization factor, and different groups of downlink transmissions correspond to different scrambling initialization factors.

In the apparatus for determining the resource of embodiments of the present disclosure, the network device sends the target downlink transmission to the terminal device, the terminal device determines the corresponding time-frequency domain resource based on the group to which the target downlink transmission belongs. Since the target downlink transmission includes at least one of one or more groups of downlink transmissions, each group of downlink transmissions includes at least one of the narrowband synchronization signal, the narrowband physical broadcast information, and the narrowband system information block, and each group of downlink transmissions has the corresponding time-frequency domain resource, the network device may indicate to the terminal the time-frequency domain resource by sending different groups of downlink transmissions, causing the terminal device to perform the downlink synchronization and/or broadcast information reception based on the time-frequency domain resource indicated.

In order to realize the above-mentioned embodiments, the present disclosure also provides a communication device.

The communication device provided in an embodiment of the present disclosure includes a processor, a transceiver, a memory, and an executable program stored in the memory and capable of being run by the processor, in which the processor is configured to execute the method as described above when running the executable program.

The communication device may be the above-mentioned network device or terminal device.

The processor may include various types of storage medium, which are non-transitory computer storage medium that may continue to memorize information stored thereon after the communication device is powered down. Here, the communication device includes a based station or a terminal.

The processor may be connected to the memory through a bus or the like, for reading the executable program stored on the memory, for example, as shown in at least one of FIGs. 1 to 4.

In order to realize the above-mentioned embodiments, the present disclosure also provides a computer storage medium.

The computer storage medium provided in the embodiment of the present disclosure having stored therein executable programs that, when executed by a processor, cause the method as described above, for example, as shown in at least one of FIGs. 1 to 4, to be implemented.

In order to realize the above-mentioned embodiments, the present disclosure also provides a computer program product.

The computer program product provided in the embodiment of the present disclosure, when instructions in the computer program product are executed by a processor, cause the method as described above, for example, as shown in at least one of FIGs. 1 to 4, to be implemented.

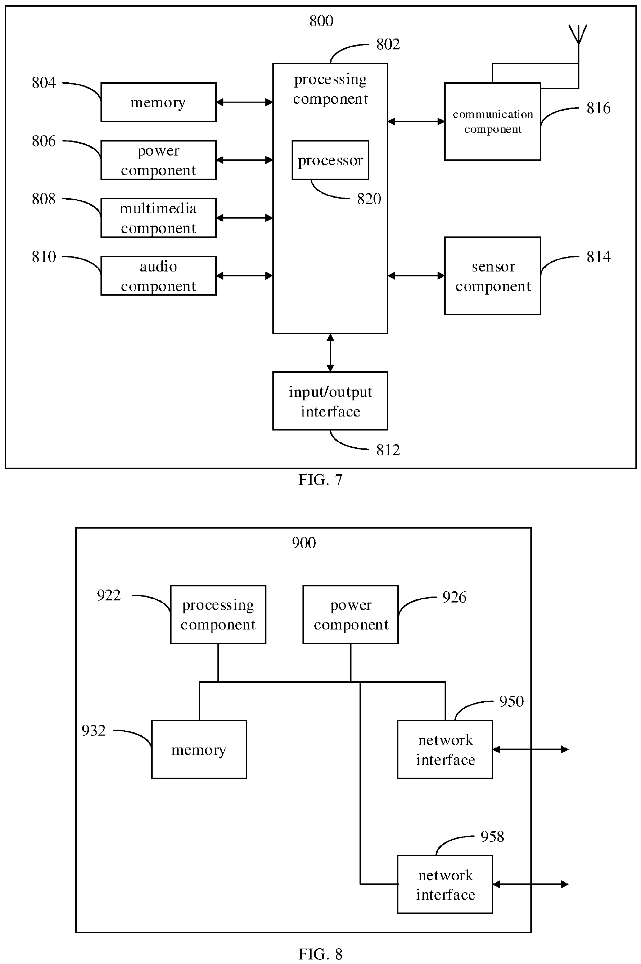

FIG. 7 is a block diagram illustrating a terminal device 800 provided in an embodiment of the present disclosure. For example, the terminal device 800 can be a mobile phone, a computer, a digital broadcast user equipment, a messaging device, a game console, a tablet device, a medical device, a fitness device, a personal digital assistant, or the like.

Referring to FIG. 8, the terminal device 800 may include at least of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, phone calls, data communications, camera operations, and recording operations. The processing component 802 can include at least one processor 820 to execute instructions to perform all or some of the steps in the above-described methods. Moreover, the processing component 802 may include at least one module which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, at least one power source, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a wake up time and a pressure associated with the touch or swipe action. In some embodiments, the multimedia component 808 includes a front camera and/or a rear camera. The front camera and/or the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the user equipment 800 is in an operation mode, such as a call mode, a recording mode, and a voice recognition mode. The received audio signal may be stored in the memory 804 or transmitted via the communication component 816. In some embodiments, the audio component 810 includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes at least one sensor to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may include a light sensor, such as a CMOS or CCD image sensor, for use in imaging applications. In some embodiments, the sensor component 814 may include an accelerometer sensor, a gyroscope sensor, a magnetic sensor, a pressure sensor, or a temperature sensor.

The communication component 816 is configured to facilitate communication, wired or wireless, between the terminal device 800 and other devices. The terminal device 800 can access a wireless network based on a communication standard, such as WiFi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal device 800 may be implemented with at least one application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 804, executable by the processor 820 in the terminal device 800, for completing the above-mentioned method. For example, the non-transitory computer-readable storage medium may be a ROM, a random access memory (RAM), a CD-ROM, a magnetic tape, a floppy disc, an optical data storage device, and the like.

FIG. 8 is a schematic diagram illustrating a structure of a network device 900 provided in an embodiment of the present disclosure. Referring to FIG. 8, the network device 900 includes a processing component 922, which includes at least one processor, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any one of the above-mentioned methods performed by the base station, for example, the method shown in FIG. 3 or FIG. 4.

The network device 900 may include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a resource, performed by a terminal device, comprising:
receiving a target downlink transmission sent by a network device, wherein, the target downlink transmission comprises at least one of one or more groups of downlink transmissions, each group of downlink transmissions comprises at least one of a narrowband synchronization signal, narrowband physical broadcast information, and a narrowband system information block; and
determining a corresponding time-frequency domain resource based on a group to which the target downlink transmission belongs, wherein the time-frequency domain resource is configured for downlink synchronization and/or broadcast information reception.

2. The method according to claim 1, wherein a group number of each group of downlink transmissions has a correspondence relationship with a time-frequency domain resource;
wherein determining the corresponding time-frequency domain resource based on the group to which the target downlink transmission belongs comprises:
determining the corresponding time-frequency domain resource based on a group number of the group to which the target downlink transmission belongs.

3. The method according to claim 2, wherein the narrowband synchronization signal comprises a narrowband secondary synchronization signal (NSSS), and the method comprises:
determining the group number of the group to which the target downlink transmission belongs based on a first generation parameter and/or a base sequence of the NSSS in the target downlink transmission.

4. The method according to claim 3, wherein the first generation parameter comprises a cyclic shift parameter; and
each group of downlink transmissions has at least one corresponding cyclic shift parameter, and different groups of downlink transmissions correspond to different cyclic shift parameters.

5. The method according to claim 2, wherein the narrowband physical broadcast information comprises a narrowband physical broadcast channel (NPBCH), and the method comprises:
determining the group number of the group to which the target downlink transmission belongs based on a second generation parameter and/or a scrambling sequence of the NPBCH in the target downlink transmission.

6. The method according to claim 5, wherein the second generation parameter comprises a scrambling initialization factor; and
each group of downlink transmissions has at least one corresponding scrambling initialization factor, and different groups of downlink transmissions correspond to different scrambling initialization factors.

7. The method according to any one of claims 1-6, comprising:
determining a beam corresponding to the time-frequency domain resource based on a beam carrying the target downlink transmission.

8. The method according to any one of claims 1-6, comprising:
determining a beam corresponding to the time-frequency domain resource based on the group to which the target downlink transmission belongs.

9. A method for determining a resource, performed by a network device, comprising:
sending a target downlink transmission to a terminal device, wherein, the target downlink transmission comprises at least one of one or more groups of downlink transmissions, each group of downlink transmissions comprises at least one of a narrowband synchronization signal, narrowband physical broadcast information, and a narrowband system information block, and each group of downlink transmissions corresponds to a time-frequency domain resource.

10. The method according to claim 9, wherein a group number of each group of downlink transmissions has a correspondence relationship with a time-frequency domain resource.

11. The method according to claim 10, wherein the narrowband synchronization signal comprises a narrowband secondary synchronization signal (NSSS); and
the group number is a first generation parameter and/or a base sequence of the NSSS.

12. The method according to claim 11, wherein the first generation parameter comprises a cyclic shift parameter; and
each group of downlink transmissions has at least one corresponding cyclic shift parameter, and different groups of downlink transmissions correspond to different cyclic shift parameters.

13. The method according to claim 10, wherein the narrowband physical broadcast information comprises a narrowband physical broadcast channel (NPBCH); and
the group number is a second generation parameter and/or a scrambling sequence of the NPBCH.

14. The method according to claim 13, wherein the second generation parameter comprises a scrambling initialization factor; and
each group of downlink transmissions has at least one corresponding scrambling initialization factor, and different groups of downlink transmissions correspond to different scrambling initialization factors.

15. An apparatus for determining a resource, performed by a terminal device, comprising:
a receiving module, configured to receive a target downlink transmission sent by a network device, wherein, the target downlink transmission comprises at least one of one or more groups of downlink transmissions, each group of downlink transmissions comprises at least one of a narrowband synchronization signal, narrowband physical broadcast information, and a narrowband system information block; and
a first determining module, configured to determine a corresponding time-frequency domain resource based on a group to which the target downlink transmission belongs, wherein the time-frequency domain resource is configured for downlink synchronization and/or broadcast information reception.

16. An apparatus for determining a resource, performed by a network device, comprising:
a sending module, configured to send a target downlink transmission sent by a terminal device, wherein, the target downlink transmission comprises at least one of one or more groups of downlink transmissions, each group of downlink transmissions comprises at least one of a narrowband synchronization signal, narrowband physical broadcast information, and a narrowband system information block, and each group of downlink transmissions corresponds to a time-frequency domain resource.

17. A communication device, comprising: a transceiver; a memory; a processor, respectively coupled to the transceiver and the memory, and configured to control wireless signal transmission and reception of the transceiver by executing computer executable instructions on the memory, and capable of implementing the method of any one of claims 1 to 8 or the method of any one of claims 9 to 14.

18. A computer storage medium having computer executable instructions stored thereon, wherein the computer executable instructions are caused to implement the method of any one of claims 1 to 8 or the method of any one of claims 9 to 14 when executed by a processor.
